# EUROPEAN PATENT APPLICATION

(11) **EP 4 586 691 A1**
(43) Date of publication of application: **16.07.2025**
(21) Application number: 23863068.5
(22) Date of filing: 31.08.2023
(51) Int. Cl.: H04W 48/10, H04W 4/48, H04W 16/26, H04W 84/00

(54) **COMMUNICATION DEVICE AND COMMUNICATION METHOD**

(30) Priority: 06.09.2022 JP 2022141472
(71) Applicant: CANON KABUSHIKI KAISHA, Tokyo 146-8501 (JP)
(72) Inventor: ONDA Taiga, Tokyo 146-8501 (JP)
(74) Representative: Canon Europe Limited
(86) International application number: PCT/JP2023/031666
(87) International publication number: WO 2024/053530

(57) **Abstract**

A communication apparatus (100) that functions as a mobile Integrated Access and Backhaul (IAB) node of a mobile communication system includes an acquisition unit (101) that acquires environment information related to a location of the communication apparatus (100), a determination unit (101) that determines whether it is necessary to transmit notification information of the communication apparatus (100) based on the environment information acquired by the acquisition unit (101), and a transmission unit (103) that transmits the notification information according to a determination result of the determination unit (101).

## Description

### Technical Field

The present disclosure relates to a communication apparatus and a communication method.

### Background Art

In the 3rd Generation Partnership Project (3GPP) (registered trademark), standardization of Integrated Access and Backhaul (IAB) has progressed as a communication technology for backhaul. The IAB technology is a technology that simultaneously uses millimeter wave wireless communication such as the 28 GHz band used for access communication between base stations and user equipment (UE) as backhaul communication (PTL 1). In such backhaul communication, a repeater referred to as an IAB node relays communication from an IAB donor, which is a base station, by millimeter wave communication. The use of the IAB technology can expand area coverage at a lower cost than conventional wired communications using optical fibers or the like.

Until now, the 3GPP (registered trademark) has formulated specifications for fixed base stations (IAB nodes that do not move) up to Release 17 (Rel-17). Currently, the 3GPP (registered trademark) plans to actively discuss a vehicle mounted relay, which will be a use case in the next Release 18 (Rel-18), and the Mobile IAB for formulating specifications to realize this use case.

Here, it is conceivable that various requirements will emerge that cannot be met only by the specifications assuming fixed base stations that have been discussed so far. Among them, one of discussion items is "permission and settings of mobile base station relays". Here, it is assumed that a mobile IAB node temporarily installed in a vehicle will function as a repeater and provide services to UEs in order to achieve special coverage and connectivity during a large event in an urban environment or a designated area. As a use case, the 3GPP (registered trademark) technical report (TR) 22.839 indicates that if a mobile IAB node is present within a specific area, it provides services to neighboring UEs, and if the mobile IAB node moves outside the specific area, it suspends the provision of services.

According to PTL 2, a technique for providing an application function and a service using location information and movement information is discussed.

### Citation List

### Patent Literature

PTL 1: Japanese Unexamined Patent Application Publication (Translation of PCT Application) No. 2019-534625
PLT 2: Japanese Patent No. 4791493

### Summary of Invention

### Technical Problem

As described above, it has been proposed to switch availability of a service depending on whether a mobile IAB node is present within a specific area. However, a specific method for controlling start and suspension of the service provision accompanying a movement of the mobile IAB node is not presented.

Thus, the present disclosure is directed to the provision of a communication apparatus and the like that can appropriately control execution and suspension of service provision of a mobile communication system.

### Solution to Problem

According to an aspect of the present disclosure, a communication apparatus that functions as a mobile Integrated Access and Backhaul (IAB) node in a mobile communication system includes acquisition means for acquiring information related to a location of the communication apparatus, and control means for differentiating whether to transmit notification information of the communication apparatus based on the information acquired by the acquisition means.

### Advantageous Effects of Invention

According to an aspect of the present disclosure, execution and suspension of the provision of a service of a mobile communication system can be appropriately controlled.

### Brief Description of Drawings

[Fig. 1] Fig. 1 illustrates a configuration example of a communication system according to a first exemplary embodiment.
[Fig. 2] Fig. 2 is a block diagram illustrating a configuration example of a communication apparatus that configures an Integrated Access and Backhaul (IAB) donor and an IAB node according to the first exemplary embodiment.
[Fig. 3] Fig. 3 is a flow chart illustrating processing in a mobile IAB node.
[Fig. 4A] Fig. 4A illustrates a change in an operation status accompanying a movement of a mobile IAB node.
[Fig. 4B] Fig. 4B illustrates a change in an operation status accompanying a movement of the mobile IAB node.
[Fig. 4C] Fig. 4C illustrates a change in an operation status accompanying a movement of the mobile IAB node.
[Fig. 5] Fig. 5 illustrates an example of a sequence for a case where a mobile IAB node participates in a fifth generation wireless (5G) network, such as when starting provision of a service.
[Fig. 6] Fig. 6 illustrates an example of a sequence for a case where a mobile IAB node leaves the 5G network, such as when suspending the provision of the service. Description of Embodiments

A communication apparatus according to an exemplary embodiment will be described in detail below with reference to the attached drawings. The technical scope of the present disclosure is defined by the claims and is not limited by the following individual exemplary embodiments.

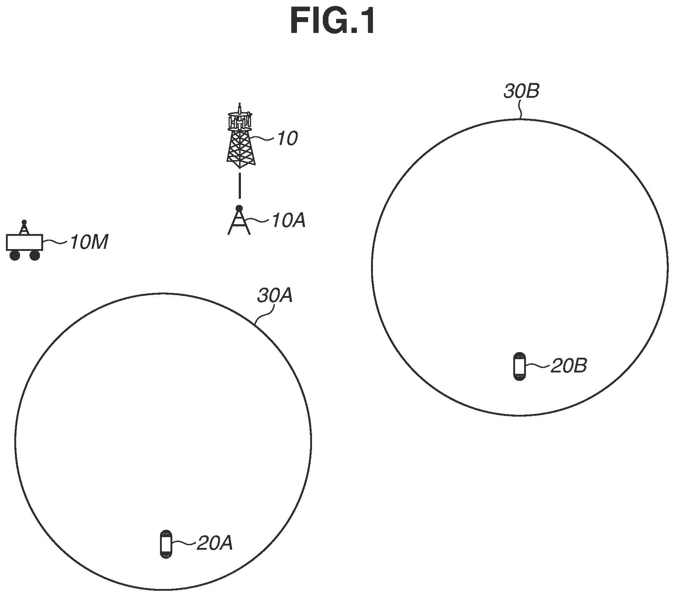

Fig. 1 illustrates a configuration example of a mobile communication system according to a first exemplary embodiment.

As illustrated in Fig. 1, the mobile communication system is configured by including an Integrated Access and Backhaul (IAB) donor 10, an IAB node 10A, which is a fixed base station capable of communicating with the IAB donor 10, and a mobile IAB node 10M.

In Fig. 1, the mobile IAB node 10M is an IAB node that is installed in a car, a bus, or the like and moves. There are a permitted area 30A (service available area) and a permitted area 30B (service available area) in a surrounding area, and terminals 20A and 20B as user equipment (UE) exist in the respective areas. According to the present exemplary embodiment, an example in which the mobile IAB node 10M is installed in a car, a bus, or the like is described, but the present invention is not limited to this. For example, it is also possible to install the mobile IAB node 10M in an unmanned aerial vehicle, such as a drone, to expand a coverage area.

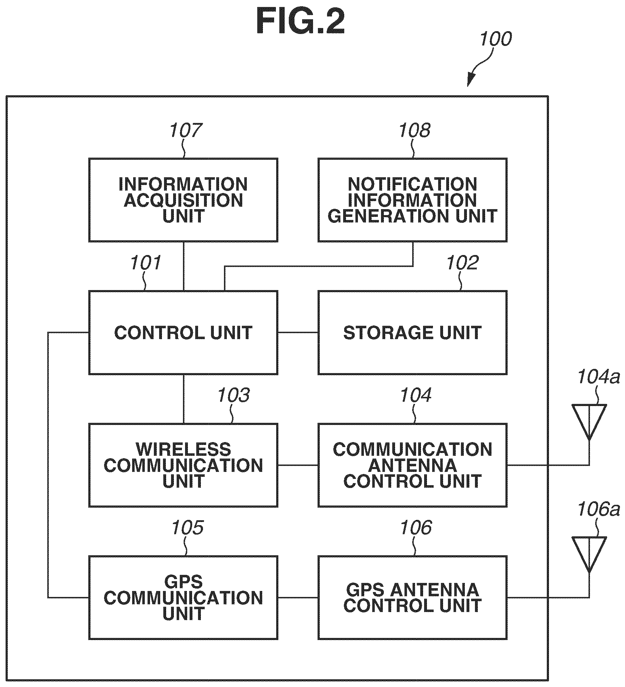

Fig. 2 is a block diagram illustrating a configuration example of the communication apparatus that configures the IAB donor and the IAB node according to the first exemplary embodiment.

A communication apparatus 100 includes a control unit 101, a storage unit 102, a wireless communication unit 103, and a communication antenna control unit 104. The communication apparatus 100 also includes a Global Positioning System (GPS) communication unit 105, a GPS antenna control unit 106, an information acquisition unit 107, and a notification information generation unit 108.

The control unit 101 controls operations of the communication apparatus 100. According to the present exemplary embodiment, the control unit 101 corresponds to an acquisition unit and a determination unit. The control unit 101 is configured with, for example, one or more processors, such as a central processing unit (CPU) and a micro processing unit (MPU) and controls the entire communication apparatus by executing a computer program stored in a random access memory (RAM), which is the storage unit 102. Processing performed by the control unit 101, which will be described with reference to a flowchart below, can also be realized using a hardware circuit, such as an application specific integrated circuit (ASIC) and a field programmable gate array (FPGA). Further, the processing described with reference to the flowchart below can also be realized by cooperation between a hardware circuit and a processor such as the CPU or MPU.

The storage unit 102 stores various information such as cell information, connection terminal information, IAB routing information, and location information, in addition to a control program executed by the control unit 101.

The wireless communication unit 103 performs cellular network communication, such as Long Term Evolution (LTE) and fifth generation wireless (5G) that conform to the 3rd Generation Partnership Project (3GPP) (registered trademark) standards.

The communication antenna control unit 104 controls a wireless communication antenna 104a used for communication via the wireless communication unit 103.

The GPS communication unit 105 receives signals from Global Positioning System (GPS) satellites and acquires location information of a current location including location specific information such as longitude and latitude information.

The GPS antenna control unit 106 controls a GPS communication antenna 106a used for communication via the GPS communication unit 105.

Various operations in the communication apparatus 100 are performed by the control unit 101 executing a control program stored in the storage unit 102.

The information acquisition unit 107 acquires information such as a movement speed and a movement distance of the communication apparatus 100 detected by various sensors, and other information. A part of the information acquisition unit 107 may be realized as a software module implemented by the control unit 101.

The notification information generation unit 108 generates notification information for notifying a user of appearance of the mobile IAB node 10M (IAB node of the communication apparatus 100).

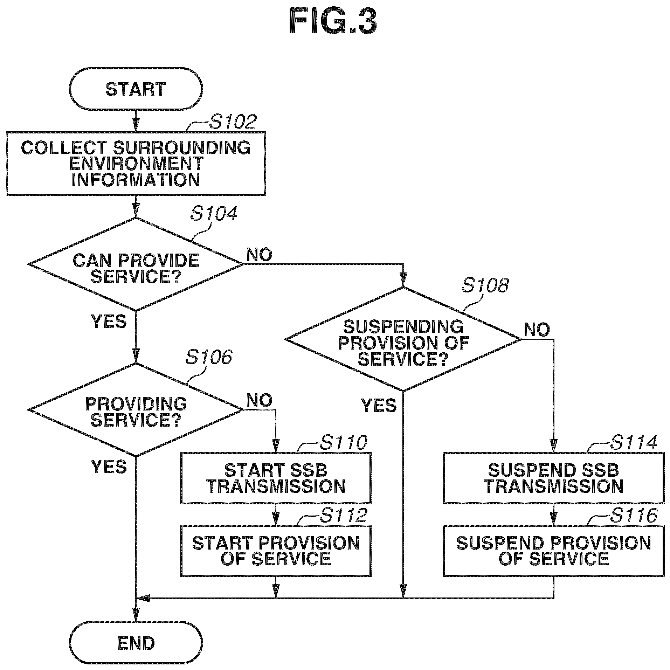

Fig. 3 is a flowchart illustrating processing in the mobile IAB node. Processing illustrated in the flowchart in Fig. 3 is an example of processing mainly executed by the control unit 201. A part of processing, such as transmission processing and collection processing is realized by the control unit 201 in cooperation with each hardware illustrated in Fig. 2.

In step S102 in Fig. 3, the control unit 101 of the communication apparatus 100 (Fig. 2) that configures the mobile IAB node 10M collects surrounding environment information. As the environment information, current location information acquired via the GPS communication unit 105 and a current speed, a location, and a speed history of a vehicle acquired via the information acquisition unit 107 from a control device of the vehicle on which the mobile IAB node 10M is mounted can be used. Further, planned route information of the vehicle on which the mobile IAB node 10M is mounted can be used as the environment information. The planned route information can be stored in the storage unit 102 in advance or can be received by the information acquisition unit 107 via a network and stored in the storage unit 102.

In step S104, the control unit 101 determines whether the mobile IAB node 10M is in a state where it can provide a service based on the environment information acquired in step S102. If it is determined that the mobile IAB node 10M is in a state where it can provide the service, the processing proceeds to step S106, whereas if it is determined that the mobile IAB node 10M is not in a state where it can provide the service, the processing proceeds to step S108. In step S104, whether the mobile IAB node 10M is in a state where it can provide the service can correspond to whether the current location of the mobile IAB node 10M belongs to any of the permitted areas including the permitted areas 30A and 30B.

For example, the control unit 101 can calculate the current location based on GPS location information acquired via the GPS communication unit 105. The control unit 101 can also calculate the current location of the mobile IAB node 10M using the GPS location information as well as the current speed, location, and speed history of the vehicle. Alternatively, the control unit 101 can also calculate the current location by combining the speed history of the vehicle with the planned route information.

The control unit 101 may predict the location of the mobile IAB node 10M at a time very close to the current time and reflect it in the determination in step S104.

For example, if it is predicted that the mobile IAB node 10M, which is currently within the permitted area 30A, will soon move outside the permitted area 30A according to the current location, the current speed of the vehicle, the planned route information, and the like, the determination in step S104 may be negative. Further, if it is predicted that the mobile IAB node 10M, which is currently outside the permitted area 30A, will soon move into the permitted area 30A, the determination in step S104 may be positive.

In step S106, the control unit 101 determines whether the mobile IAB node 10M is in a state of providing the service to a neighboring UE. If the determination is positive, the processing is terminated, and if the determination is negative, the processing proceeds to step S110.

In step S110, the control unit 101 starts transmission of a Synchronization Signal Block Physical Broadcast Channel Block (SSB/PBCH), which is notification information of the mobile IAB node 10M generated by the notification information generation unit 108, via the wireless communication unit 103. SSB stands for Synchronization Signal (SS) /Physical Broadcast Channel (PBCH) Block. The notification information may include a System Information Block (SIB).

The SSB is a synchronization signal that is periodically transmitted by a base station including the mobile IAB node to detect a cell frequency and a reception timing necessary for communication and is notification information that notifies a user of a major wireless parameter. The SSB includes two synchronization signals, primary and secondary, which are periodically transmitted. The base station including the mobile IAB node uses the SSB to notify system parameters for finding a user terminal and an IAB node cell, establishing frame synchronization, and measuring downlink reception quality. Specifically, the system parameters such as a Public Land Mobile Network (PLMN) and Closed Access Group (CAG) are notified. In this way, the base station including the mobile IAB node uses the SSB to provide information necessary to achieve initial access and mobility.

In step S112, the control unit 101 starts provision of the service to cause the mobile IAB node 10M to function as a repeater to the neighboring UE by communication via the wireless communication unit 103 and terminates the processing.

On the other hand, in step S108, the control unit 101 determines whether the mobile IAB node 10M is in a state of suspending the provision of the service to the neighboring UE. If the determination is positive, the processing is terminated, and if the determination is negative, the processing proceeds to step S114.

In step S114, the control unit 101 suspends the transmission of the SSB, which is the notification information of the mobile IAB node 10M, via the wireless communication unit 103.

In step S116, the control unit 101 suspends the provision of the service of the mobile IAB node 10M to the neighboring UE via the wireless communication unit 103 and terminates the processing.

A series of processing illustrated in steps S102 to S116 is executed periodically while the mobile IAB node 10M is activated. Accordingly, it is possible to appropriately execute start and suspension processing of service provision depending on a situation, such as whether the mobile IAB node 10M is present in the permitted area 30A or the permitted area 30B.

As defined in the Technical specification (TS) 38.473, the SSB can specify up to five timings, one SSB for UE access and four SSBs for connection to neighboring IAB nodes. According to the present exemplary embodiment, the SSB, which performs start and suspension, can be configured to stop all these SSBs. The SSB can also be configured to start or suspend only the SSB for UE access, while maintaining participation of the mobile IAB node 10M in the 5G network to reduce reconnection overhead.

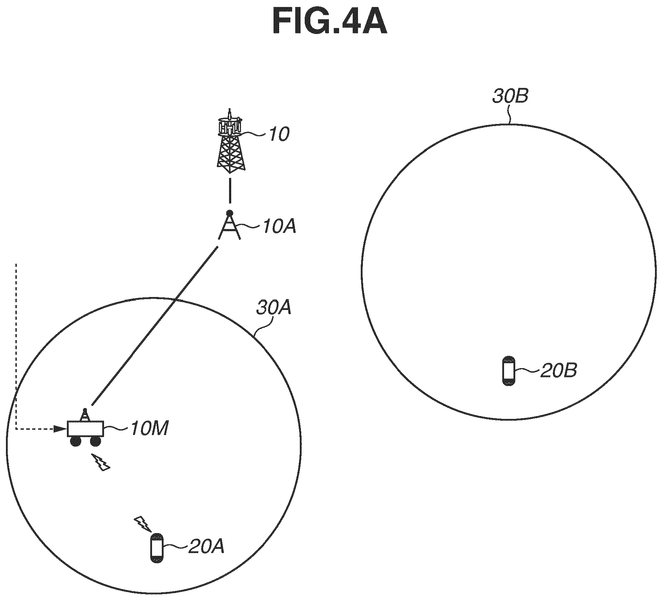

Figs. 4A to 4C illustrate changes in an operating status associated with the movement of the mobile IAB node 10M.

As described above, the mobile IAB node 10M is an IAB node that is installed in a car, a bus, or the like and moves. In a case where the mobile IAB node 10M is outside the permitted areas 30A and 30B (a case where the determination in step S104 is negative) as in a case illustrated Fig. 1, the mobile IAB node 10M does not provide the service and thus does not connect to the terminals 20A and 20B. At this time, the mobile IAB node 10M does not connect to the terminals 20A and 20B and thus does not transmit its own notification information (a state where the determination in step S108 is positive).

As illustrated in Fig. 4A, in a case where the mobile IAB node 10M moves and enters the permitted area 30A (a case where the determination in step S104 is positive), the mobile IAB node 10M starts provision of the service. Then, the mobile IAB node 10M provides the service to the terminal 20A within the permitted area 30A in response to a request from the terminal 20A. At this time, the mobile IAB node 10M starts transmitting its own notification information from when it enters the permitted area 30A (step S110) and sets itself to be able to provide the service if the terminal 20A connects thereto (step S112).

Further, the mobile IAB node 10M connects to the IAB node 10A, which is an upper IAB node, to cause itself to participate in the 5G network, and participates in the 5G network. The 5G network is an example of a radio access network in which the communication apparatus participates.

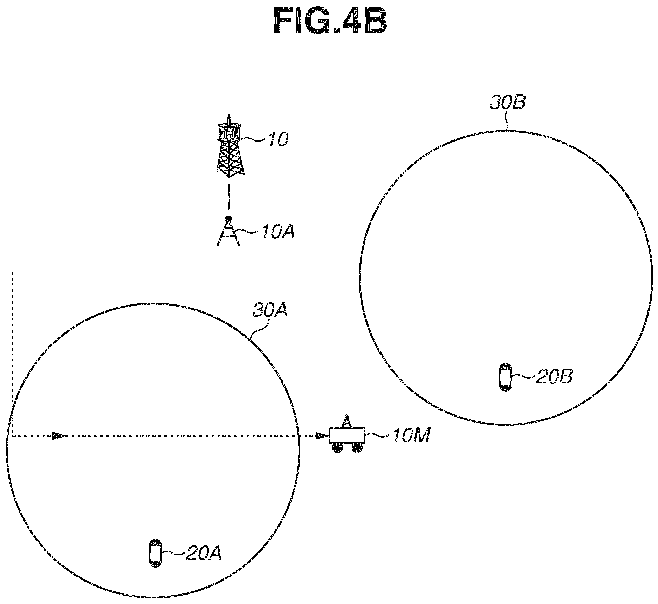

As illustrated in Fig. 4B, in a case where the mobile IAB node 10M moves further and goes outside the permitted area 30A (a case where the determination in step S104 is negative), the mobile IAB node 10M terminates the provision of the service (step S116). At this time, the mobile IAB node 10M suspends transmission of the notification information that it had been transmitting up until then.

Further, the mobile IAB node 10M disconnects from the IAB node 10A related to the upper IAB node and also disconnects from the terminal 20A in order for itself to leave the 5G network.

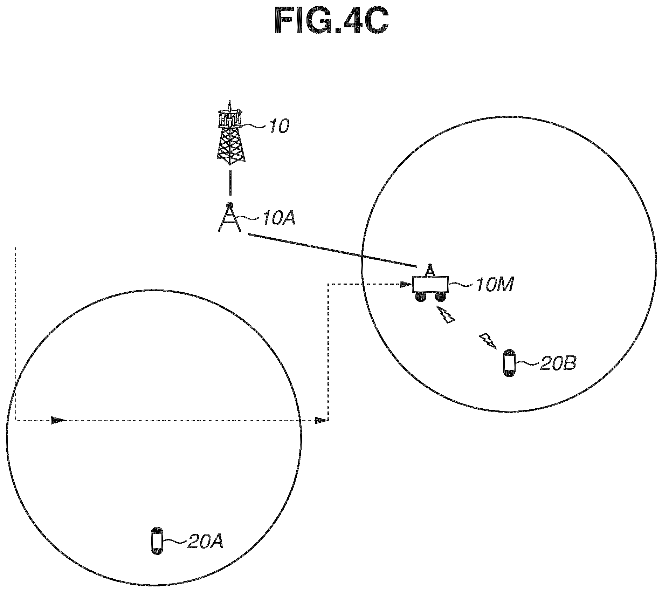

As illustrated in Fig. 4C, in a case where the mobile IAB node 10M further moves and enters the permitted area 30B (a case where the determination in step S104 is positive), the mobile IAB 10M starts the provision of the service again. Specifically, the mobile IAB node 10M resumes the transmission processing of its own notification information (step S110) and transitions to a state where it can provide the service if the terminal 20B connects thereto (step S112).

Further, the mobile IAB node 10M connects to the IAB node 10A, which is the upper IAB node, to cause itself to participate in the 5G network again, and participates in the 5G network.

According to the present exemplary embodiment, an example is described in which the IAB node 10A of the fixed base station is connected as the upper node, but another IAB node may be connected as the upper IAB node in each of the permitted areas 30A and 30B. Further, the mobile IAB node 10M may connect to an upper IAB node under a different IAB donor in each of the permitted areas 30A and 30B, instead of the common IAB donor 10.

Further, a connection destination of the mobile IAB node 10M is not limited to the IAB node of the fixed base station, and it may be connected to another mobile IAB node.

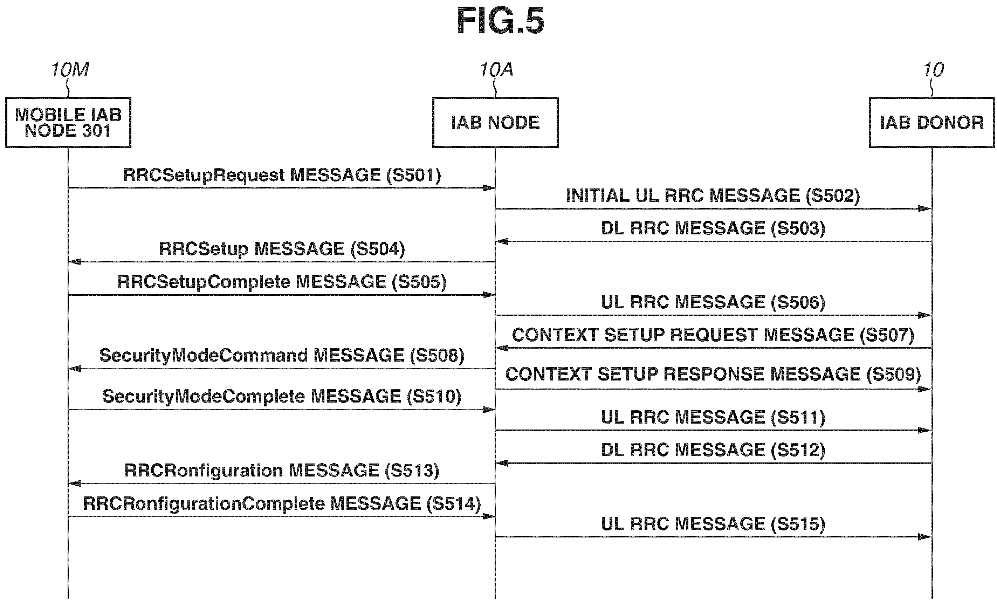

Fig. 5 illustrates an example of a sequence of a case where the mobile IAB node 10M participates in the 5G network at a time of starting the provision of the service or the like. The present sequence is an example of a 5G network connection sequence of a commonly used IAB node according to the 3GPP (registered trademark) standard defined in the Technical report (TR) 38.401.

As illustrated in Fig. 5, first, in step S501, the mobile IAB node 10M transmits a radio resource control (RRC)Setup message to the IAB node 10A.

Upon receiving the message, if the IAB node 10A causes the mobile IAB node 10M, which is the transmission source, to participate in the 5G network, in step S502, it transmits an initial uplink (UL) RRC message to the IAB donor 10.

When the initial UL RRC message is received, in step S503, the IAB donor 10 transmits a downlink (DL) RRC message to the IAB node 10A. In step S504, the IAB node 10A that receives the DL RRC message relayed by the IAB donor 10 notifies the mobile IAB node 10M of the RRCSetup message.

Upon receiving the RRCSetup message, in step S505, the mobile IAB node 10M transmits an RRCSetupComplete message to the IAB node 10A. In step S506, the IAB node 10A that receives the RRCSetupComplete message relays it and transmits a UL RRC message to the IAB donor 10.

In step S507, the IAB donor 10 transmits a context setup request message to the IAB node 10A in order to establish a context for the mobile IAB node 10M connecting thereto within itself.

Upon receiving the context setup request message, in step S508, the IAB node 10A transmits a SecurityModeCommand message to the mobile IAB node 10M.

After transmitting the SecurityModeCommand message, in step S509, the IAB node 10A asynchronously transmits a context setup response message to the IAB donor 10.

In parallel with this, in step S510, the mobile IAB node 10M transmits a SecurityModeComplete message to the IAB node 10A. In step S511, the IAB node 10A that receives the SecurityModeComplete message relays it and transmits the UL RRC message to the IAB donor 10.

In step S512, the IAB donor 10 that receives the UL RRC message includes an RRCReconfiguration message in the DL RRC message and transmits it to the IAB node 10A. In step S513, the IAB node 10A that receives the DL RRC message relays it and transmits the RRCReconfiguration message to the mobile IAB node 10M.

In step S514, the mobile IAB node 10M transmits an RRCReconfigurationComplete message, which is a response to the RRCReconfiguration message, to the IAB node 10A. In step S515, the IAB node 10A that receives the RRCReconfigurationComplete message relays it and transmits the UL RRC message to the IAB donor 10.

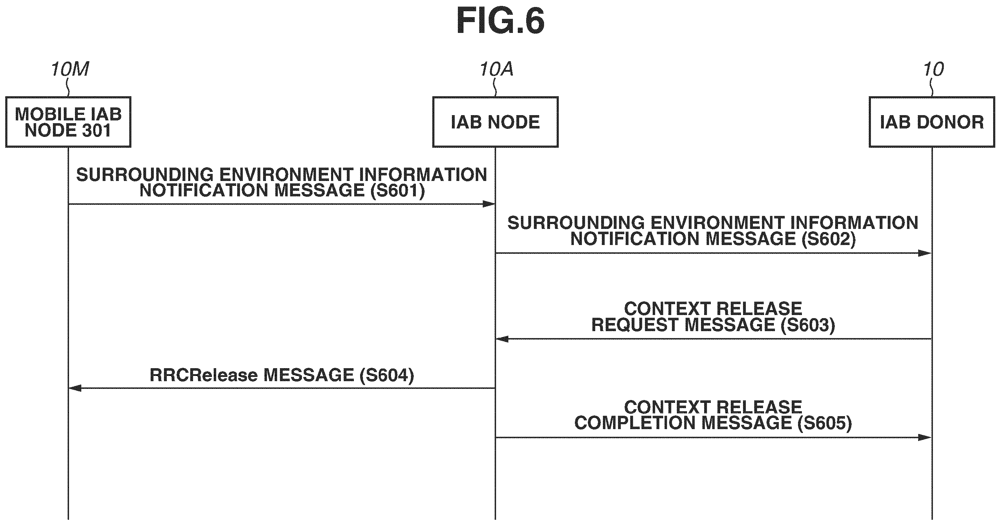

Fig. 6 illustrates an example of a sequence for a case where the mobile IAB node 10M leaves the 5G network at a time of suspending the provision of the service or the like. The present sequence is an example of a general 5G network connection sequence of the IAB node according to the 3GPP (registered trademark) standard defined in TR 38.401.

In a case where the IAB node leaves the 5G network, the IAB donor generally receives a trigger for disconnection.

Fig. 6 illustrates an example in which an environment information notification message from the mobile IAB node 10M serves as a trigger for disconnection. The environment information notification message is, for example, a message for notifying that the provision of the service by the mobile IAB node 10M is suspended.

First, in step S601, the mobile IAB node 10M transmits a surrounding environment information notification message to the IAB node 10A.

The IAB node 10A that receives the surrounding environment information notification message relays it and, in step S602, transmits the environment information notification message to the IAB donor 10. Here, it is assumed that the surrounding environment information notification message includes information that the mobile IAB node 10M wishes to leave the 5G network.

In step S603, the IAB donor 10 that receives the information transmits a context release request message to the IAB node 10A to cause the mobile IAB node 10M to leave the 5G network.

In step S604, the IAB node 10A that receives the context release request message transmits an RRCRelease message to the mobile IAB node 10M. Subsequently, in step S605, the IAB node 10A transmits a context release completion message to the IAB donor 10.

As described above, according to the present exemplary embodiment, the current location of the mobile IAB node 10M is determined based on the environment information related to the location of the communication apparatus, and start and suspension of the provision of the service is controlled. Thus, execution and suspension of the provision of the service by the mobile IAB node 10M can be appropriately controlled. In other words, in a case where the mobile IAB node 10M is within the service available area, the service is executed, and in a case where the mobile IAB node 10M is outside the service available area, the service is suspended.

The present disclosure has been described in detail above based on the exemplary embodiments, but the present disclosure is not limited to these specific exemplary embodiments, and various forms that do not deviate from the gist of the present invention are also included in the present disclosure.

For example, according to the present exemplary embodiment, an SSB to be notified to the surroundings may be configured to include a flag indicating a suspension notice. The flag indicating the suspension notice is a flag indicating whether suspension of the service is scheduled to occur soon. For example, if the flag is "1", it indicates that the suspension of the service is scheduled to occur soon, and if the flag is "0", it indicates that the suspension of the service is not scheduled to occur soon. The mobile IAB node 10M determines whether to set the flag to "0" or "1" based on the location information, the speed information, and the planned route information. The information can be configured to be stored, for example, in an optional area of an SIB 1. Further, it is also possible to configure the flag to be stored in a reserved area of a Master Information Block (MIB) transmitted on the PBCH. Furthermore, it is also possible to configure a currently unused SS block candidate resource to newly store notification information regarding the IAB and to configure the new SSB resource to be used for notification. In this case, for example, in addition to currently defined SIB 1 to SIB 21, it is possible to configure an SIB 22, which is allocated to the new SSB resource, to be used for notification of the notification information regarding the IAB including the above-described flag.

The flag can be used, for example, to determine whether a terminal or the like as a UE connects to the mobile IAB node 10M. Further, the flag can be used, for example, to determine whether a UE already connected to the mobile IAB node 10M will switch its connection destination to another base station or IAB node.

By including the present information, another IAB node or UE that is a recipient can arbitrarily change its behavior in a case where a connection partner is the mobile IAB node.

According to the present exemplary embodiment, the communication apparatus installed in a car, a bus, or the like is described as an example, but the present disclosure is not limited to this. It is also possible to incorporate hardware and software for functioning as the communication apparatus into a vehicle itself, such as a car or a bus. In this case, the communication apparatus as a car or a bus includes, in addition to the hardware illustrated in Fig. 2, hardware for functioning as an automobile, such as an engine serving as a driving source of the vehicle, a frame, tires, and an electronic control unit (ECU).

The present disclosure may also be configured to supply a recording medium storing a program code of software that implements the above-described functions to a system or an apparatus and cause a computer (a CPU or an MPU) of the system or the apparatus to read and execute the program code stored in the recording medium. In this case, the program code itself read out from the storage medium implements the functions of the above-described exemplary embodiments, and the storage medium storing the program code constitutes the present disclosure.

As a storage medium for supplying the program code, for example, a flexible disk, a hard disk, an optical disk, a magneto-optical disk, a compact disk read only memory (CD-ROM), a CD readable (CD-R), a magnetic tape, a nonvolatile memory card, a ROM, and a digital versatile disk (DVD) can be used.

Further, the above-described functions may be realized not only by the computer executing the program code read out, but also by an operating system (OS) running on the computer performing a part or all of actual processing based on an instruction from the program code. OS stands for operating system.

Further, the program code read out from the storage medium is written into a memory provided on a function expansion board inserted into the computer or a function expansion unit connected to the computer. Then, based on an instruction from the program code, a CPU provided on the function expansion board or the function expansion unit may perform a part or all the actual processing to implement the above-described functions.

According to the above-described exemplary embodiments, the wireless access method is a New Radio (NR), which is a 5G wireless access method, but other access methods such as Long Term Evolution (LTE), sixth generation of wireless communications (6G) and later, and Wireless Fidelity (Wi-Fi) may be applied at least in part.

The present invention is not limited to the above-described exemplary embodiments, and various modifications and changes can be made without departing from the spirit and the scope of the present invention. Therefore, the following claims are attached in order to publicize the scope of the present invention.

This application claims priority based on Japanese Patent Application No. 2022-141472 filed on September 6, 2022, the entire contents of which are incorporated herein by reference.

### Description of Reference Numerals

- 10M: Mobile IAB node
- 10: IAB donor
- 10A: IAB node
- 20A: Terminal (UE)
- 20B: Terminal (UE)
- 30A: Permitted area
- 30B: Permitted area
- 100: Communication apparatus
- 101: Control unit (acquisition unit, determination unit)
- 102: Storage unit
- 103: Wireless communication unit (transmission unit)
- 104: Communication antenna control unit
- 105: GPS communication unit
- 106: GPS antenna control unit

## Claims

1. A communication apparatus that functions as a mobile Integrated Access and Backhaul (IAB) node in a mobile communication system, the communication apparatus comprising:
acquisition means for acquiring information related to a location of the communication apparatus; and
control means for differentiating whether to transmit notification information of the communication apparatus based on the information acquired by the acquisition means.

2. The communication apparatus according to Claim 1, wherein the acquired information includes at least one of location information of the communication apparatus, information indicating a speed of the communication apparatus, and planned route information of the communication apparatus.

3. The communication apparatus according to Claim 1 or 2, further comprising determination means for determining whether the communication apparatus is present within a service available area based on the information acquired by the acquisition means,
wherein, in a case where the determination means determines that the communication apparatus is present within the service available area, the control means performs control to transmit the notification information of the communication apparatus, and in a case where the determination means does not determine that the communication apparatus is present within the service available area, the control means performs control not to transmit the notification information of the communication apparatus.

4. The communication apparatus according to any one of Claims 1 to 3, wherein the notification information is transmitted using a Synchronization Signal/Physical Broadcast Channel Block (SSB).

5. The communication apparatus according to any one of Claims 1 to 4, wherein the notification information includes information indicating whether suspension of a service of the communication apparatus is scheduled.

6. The communication apparatus according to Claim 3, wherein, in a case where the determination means determines that the communication apparatus is present within the service available area, the control means controls the communication apparatus to participate in a radio access network.

7. The communication apparatus according to Claim 6, wherein, in a case where the determination means determines that the communication apparatus is present outside the service available area, the communication apparatus does not participate in the radio access network or leaves the radio access network.

8. The communication apparatus according to any one of Claims 1 to 7, wherein the communication apparatus is an automobile further including an engine as a driving source.

9. A method for communication using a mobile IAB node in a mobile communication system, the method comprising:
acquiring environment information related to a location of the mobile IAB node;
determining whether it is necessary to transmit notification information of the mobile IAB node based on the environment information acquired in the acquiring; and
transmitting the notification information according to a determination result in the determining.

10. A program for causing a computer configured to cause a communication apparatus to function as a mobile IAB node in a mobile communication system to execute:
acquiring information related to a location of the mobile IAB node; and
performing control to differentiate whether the communication apparatus transmits notification information based on the information acquired in the acquiring.
